# EUROPÄISCHE PATENTSCHRIFT

(11) **EP 1 111 332 B1**
(45) Veröffentlichungstag und Bekanntmachung des Hinweises auf die Patenterteilung: **19.10.2005**
(21) Anmeldenummer: 00128158.3
(22) Anmeldetag: 21.12.2000
(51) Int. Cl.: G01B 11/00, G01B 11/02

(54) **Verfahren zur Ermittlung der Position eines Lichtspots auf einer Fotodioden-Zeile**
Method for the detection of the position of a light spot on a photodiode array
Procédé pour la détection de la position d' un spot lumineux sur un réseau de photodiodes

(30) Priorität: 23.12.1999 DE 19962701
(43) Veröffentlichungstag der Anmeldung: 27.06.2001
(73) Patentinhaber: SICK AG, 79183 Waldkirch, Breisgau (DE)
(72) Erfinder: Merettig, Gerhard, 79350 Sexau (DE); Waslowski, Kai, 79312 Emmendingen (DE)
(74) Vertreter: Manitz, Finsterwald & Partner GbR

(56) Entgegenhaltungen:
- DE-A- 3 626 208
- GB-A- 1 536 022
- GB-A- 2 161 600
- US-A- 4 708 483

## Beschreibung

Die Erfindung betrifft ein Verfahren zur Ermittlung der Position eines Lichtspots auf einer aus m Fotodioden-Zellen bestehenden Fotodioden-Zeile.

Derartige Verfahren werden beispielsweise bei der Realisierung bestimmter Lichttaster benötigt, wobei hier zumindest zwei Anwendungsfälle unterschieden werden können:
Bei einer ersten Art von Lichttastern, insbesondere solchen mit integrierter Hintergrundausblendung, ist es erforderlich, zu erkennen, ob sich ein Lichtspot an einer bestimmten, vorgegebenen Position auf der Fotodioden-Zeile befindet. Es wird somit bei diesem Anwendungsfall lediglich eine binäre Information benötigt, welche aussagt, ob der Lichtspot die vorgegebene Position einnimmt oder nicht.
Bei einer zweiten Art von Lichttastern, insbesondere solchen mit Analogausgang, wird eine analoge Information dahingehend benötigt, an welcher Position innerhalb einer Fotodioden-Zeile sich ein auf diese Fotodioden-Zeile auftreffenden Lichtspot gerade befindet.

Bei beiden Anwendungsfällen ist es wünschenswert, hinsichtlich des Orts des Auftreffens des Lichtspots eine möglichst genaue Information zu erhalten. Eine hohe Auflösung läßt sich grundsätzlich dadurch realisieren, daß in der Fotodioden-Zeile eine möglichst große Anzahl von Fotodioden-Zellen zum Einsatz gelangt. Jedoch müssen benachbarte Fotodioden-Zellen durch einen Trennsteg voneinander abgegrenzt werden, was jedoch aufgrund der auf die Trennstege auftreffenden Lichtenergie einen nachteiligen Energieverlust bewirkt. Aufgrund dieses Energieverlusts läßt sich die Anzahl der Fotodioden-Zellen in der Fotodioden-Zeile nicht beliebig erhöhen.

Ein Verfahren gemäß dem Oberbegriff des Anspruchs 1 ist aus der GB-A-1 536 022 bekannt.

Eine Aufgabe der Erfindung besteht darin, ein Verfahren der eingangs genannten Art derart weiterzubilden, daß hinsichtlich der Position des Lichtspots eine möglichst genaue Information erhalten werden kann.

Erfindungsgemäß wird diese Aufgabe durch ein Verfahren nach Anspruch 1 und insbesondere dadurch gelöst,
- daß das Größenverhältnis zwischen Lichtspot und Fotodioden-Zellen derart gewählt wird, daß sich der Lichtspot zumindest über drei benachbarte Fotodioden-Zellen (Zₙ₋₁, Zₙ, Zₙ₊₁)erstreckt,
- daß jeder der m Fotodioden-Zellen (Zₓ) jeweils ein Faktor (Fₓ) zugeordnet wird,
- daß für alle m Fotodioden-Zellen (Zₓ) die jeweils empfangene Energie (Eₓ) ermittelt wird,
- daß bezüglich jeder der m Fotodioden-Zellen (Zₓ) da Produkt (Pₓ) aus der jeweils empfangenen Energie (Eₓ) und dem jeweils zugeordneten Faktor (Fₓ) bestimmt wird,
- daß als die Position des Lichtspots auf der Fotodioden-Zeile kennzeichnender Wert die Summe S der m Produkte (Pₓ) herangezogen wird,
- daß zu Beginn eines dem eigentlichen Betriebsmodus vorgeschalteten Teach-Modus diejenige Fotodioden-Zelle Zₙ ermittelt wird, in deren Bereich der energetische Schwerpunkt eines in Sollposition befindlichen Teach-Lichtspots liegt, und
- daß für den Betriebsmodus alle Faktoren F₁ bis Fₙ₋₁ mit -b, alle Faktoren Fₙ₊₁ bis Fₘ mit +b und der Faktor Fₙ mit einem zwischen -b und +b liegenden Wert derart belegt werden, daß die Summe S bei in Sollposition befindlichem Lichtspot den Wert "0" annimmt.

Durch dieses erfindungsgemäße Verfahren wird sichergestellt, daß sich der Lichtspot über zumindest drei Photodioden-Zellen erstreckt, wobei durch die Gewichtung der durch diese Zellen empfangenen Energie mit den genannten Faktoren die gewünschte Positionsinformation erhalten werden kann, was nachfolgend noch anhand von bevorzugten Ausführungsbeispielen erläutert wird. Grundsätzlich läßt sich das erfindungsgemäße Verfahren an verschiedene Anwendungsfälle und Anforderungen dadurch anpassen, daß die einzelnen, den Fotodioden-Zellen zugeordneten Faktoren unterschiedlich belegt werden. Dies läßt sich in sehr wirtschaftlicher Weise durch eine reine Software-Maßnahme realisieren, ohne daß irgendwelche baulichen Veränderungen an der Fotodioden-Zeile oder einer damit verbundenen Kontroll- bzw. Steuereinheit vorzunehmen wären. Mit dem erfindungsgemäßen Verfahren kann also eine Fotodioden-Zeile durch bloßes "Umprogrammieren" sehr schnell und sehr kostengünstig für verschiedene Anwendungsfälle und Anforderungen konfiguriert werden.

Die genannten Faktoren sowie die genannten Rechenoperationen können entweder digital oder analog ausgeführt werden. Bei der analogen Ausführung kann die Multiplikation mit einem Faktor beispielsweise über die variable Integrationszeit eines elektronischen Bauteils oder über die logarithmische Kennlinie eines elektronischen Bauteils bewerkstelligt werden.

Die erfindungsgemäß vorgesehenen Faktoren werden in einem Teach-Modus ermittelt, der dem eigentlichen Betriebsmodus vorgeschaltet wird.

Im Rahmen des Teach-Modus wird eine für den vorstehend erläuterten binären Anwendungsfall fest definierte Sollposition des Lichtspots eingelernt. Hierzu wird zuerst diejenige Fotodioden-Zelle Zₙ ermittelt, in deren Bereich der energetische Schwerpunkt eines in Sollposition befindlichen Teach-Lichtspots liegt.

Nachdem die Fotodioden-Zelle Zₙ ermittelt wurde, werden für den Betriebsmodus alle Faktoren F₁ bis Fₙ₋₁ mit -b, alle Faktoren Fₙ₊₁ bis Fₘ mit +b und der Faktor Fₙ mit einem zwischen -b und +b liegenden Wert belegt, wobei der Wert des Faktors Fₙ so gewählt wird, daß die Summe Sₙ bei in Sollposition befindlichem Lichtspot den Wert "0" annimmt. Bei einer derartigen Belegung der Faktoren wird erreicht, daß die Summe Sₓ immer einen negativen Wert annimmt, wenn der Lichtspot ausgehend von der Sollposition in eine Richtung verschoben ist und immer einen positiven Wert annimmt, wenn der Lichtspot ausgehend von der Sollposition in die andere Richtung verschoben ist. Der Summenwert "0" tritt nur dann auf, wenn sich der Lichtspot tatsächlich in Sollposition befindet.

Bei dem vorstehend beschriebenen Verfahren können die mit den Variablen a und b bezeichneten Werte beispielsweise gleich "1" sein, jedoch sind ebenso beliebig andere Wert verwendbar.

Die Fotodioden-Zelle Zₙ, in deren Bereich der energetische Schwerpunkt eines in Sollposition befindlichen Teach-Lichtspots liegt, kann gemäß den beiden nachfolgend erläuterten Varianten ermittelt werden:

In einer einfachen Variante wird während des Teach-Modus diejenige Fotodioden-Zelle Zₙ ermittelt, die die höchste empfangene Energie Eₙ liefert. Zu diesem Zweck werden einfach alle von den m Fotodioden-Zellen gelieferten Energien Eₓ erfaßt, während der Teach-Lichtspot auf die Fotodioden-Zeile auftrifft, und anschließend wird dann diejenige Fotodioden-Zelle Zₙ ausgewählt, die die höchste Energie Eₙ liefert. Dieses Verfahren kann jedoch bei Lichtspots, welche eine relativ unregelmäßige Form aufweisen, problematisch sein, da bei solchen Lichtspots nicht unbedingt der energetische Schwerpunkt auf derjenigen Fotodioden-Zelle liegt, die die höchste Energie liefert.

Diesem Problem kann durch das folgende, etwas aufwendigere Verfahren abgeholfen werden:

Es werden nacheinander für x = 1 bis m jeweils folgende Schritte durchgeführt:
- Belegung aller Faktoren F₁ bis Fₓ₋₁ mit -a
- Belegung des Faktors Fₓ mit "0"
- Belegung aller Faktoren Fₓ₊₁ bis Fₘ mit +a
- Bildung der Summe Sₓ.

Anschließend werden dann alle m ermittelten Summen Sₓ miteinander verglichen, wobei aus diesen Summen diejenige Summe Sₙ ausgewählt wird, welche den betragsmäßig geringsten Wert aufweist. Die der Summe Sₙ zugeordneten Fotodioden-Zelle Zₙ wird dann als diejenige Fotodioden-Zelle definiert, auf welcher der energetische Schwerpunkt des Teach-Lichtspots liegt. Durch dieses Verfahren wird dem tatsächlichen Schwerpunkt des Lichtspots Rechnung getragen, und zwar unabhängig von der Regelmäßigkeit seiner Form.

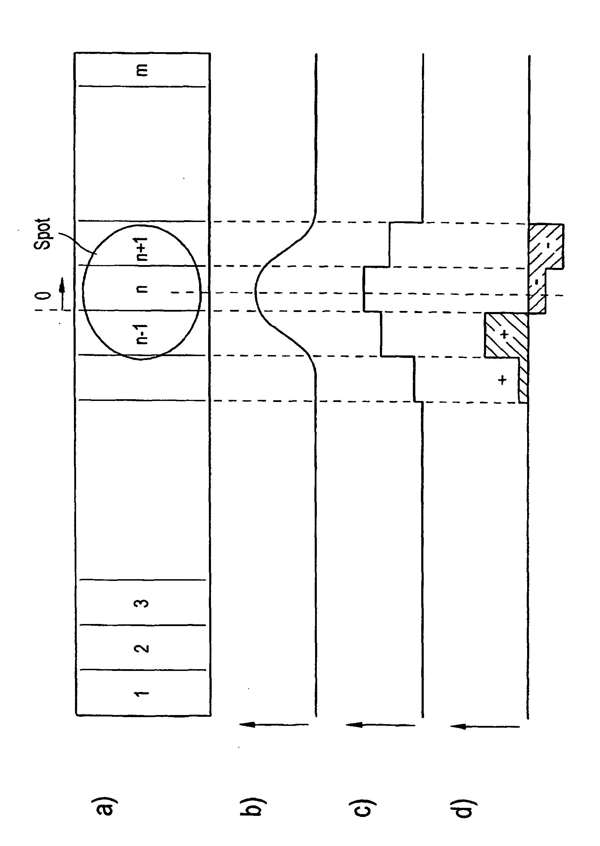

Das vorstehend beschriebene Verfahren kann also eingesetzt werden, um festzustellen, ob sich ein Lichtspot an einer vorgegebenen Sollposition befindet. Ebenso kann das Verfahren aber auch genutzt werden, um festzustellen, ob sich ein Lichtspot auf der einen oder auf der anderen Seite der zuvor festgelegten Sollposition befindet. Beide Anwendungsfälle lassen sich als "Binärbetrieb" kennzeichnen, welcher nachfolgend noch anhand der Zeichnung beschrieben wird.

Gegenstand der Erfindung ist ferner ein Verfahren mit den Merkmalen des Anspruchs 6, mittels welchem festgestellt werden kann, an welcher Position auf der Fotodioden-Zeile sich der Lichtspot befindet. Dieses Verfahren liefert im Unterschied zu dem vorstehend diskutierten Verfahren keine binäre Information ("Lichtspot in Sollposition" / "Lichtspot nicht in Sollposition"), sondern es wird hier eine analoge Information geliefert, welche tatsächlich Aufschluß darüber gibt, an welcher Stelle der Fotodioden-Zeile sich ein Lichtspot gerade befindet. Insbesondere ist durch das Verfahren nach Anspruch 6 die Position des energetischen Schwerpunktes des Lichtspots innerhalb der Fotodioden-Zelle Zₙ eindeutig und genau bestimmbar.

Durch die Belegung der einzelnen Faktoren gemäß Anspruch 6 kann hinsichtlich der Position des Lichtspots auf der Fotodioden-Zeile eine sehr hohe Auflösung erreicht werden, die nicht mehr - wie bei aus dem Stand der Technik bekannten Verfahren - von den räumlichen Abmessungen der einzelnen Fotodioden-Zellen abhängig ist. Vielmehr kann erfindungsgemäß sehr genau festgestellt werden, an welcher Position innerhalb einer Fotodioden-Zelle sich der energetische Schwerpunkt eines Lichtspots befindet.

Dabei wird die grobe Position des Schwerpunkts des Lichtspots durch den ermittelten Wert n bestimmt, während die exakte Position des Schwerpunkts innerhalb der Fotodioden-Zelle Zₙ durch den ermittelten Faktor Fₙ gekennzeichnet wird.

Konkret wird bei dem Verfahren nach Anspruch 6 wie folgt vorgegangen:

Es werden nacheinander für x = 1 bis m jeweils folgende Schritte durchgeführt:
- Belegung aller Faktoren F₁ bis Fₓ₋₁ mit -a
- Belegung des Faktors Fₓ mit "0"
- Belegung aller Faktoren Fₓ₊₁ bis Fₘ mit +a
- Bildung der Summe Sₓ.

Anschließend werden dann alle m ermittelten Summen Sₓ miteinander verglichen, wobei aus diesen Summen diejenige Summe Sₙ ausgewählt wird, welche den betragsmäßig geringsten Wert aufweist. Auf diese Weise wird der Wert n bzw. die Fotodioden-Zelle Zₙ bestimmt.

Schließlich werden alle Faktoren F₁ bis Fₙ₋₁ mit -b, alle Faktoren Fₙ₊₁ bis Fₘ mit +b und der Faktor Fₙ mit einem zwischen -b und +b liegenden Wert belegt, wobei der Wert des Faktors Fₙ so gewählt wird, daß die Summe Sₙ den Wert "0" annimmt. Der Faktor Fₙ steht dann in einer definierten Beziehung zur Position des energetischen Schwerpunktes des Lichtspots innerhalb der Fotodioden-Zelle Zₙ. Somit wird diese Position letztlich durch die beiden Werte n und Fₙ eindeutig und genau bestimmbar.

Anhand der einzigen Figur wird nachfolgend die Durchführung einer erfindungsgemäßen Verfahrensalternative erläutert, mittels welcher festgestellt werden kann, ob sich ein Lichtspot an einer zuvor festgelegten Sollposition befindet (binäre Alternative):

Diagramm a zeigt eine horizontal angeordnete Fotodioden-Zeile, welche aus insgesamt n fortlaufend numerierten, einander benachbarten Fotodioden-Zellen besteht. Die einzelnen Fotodioden-Zellen besitzen untereinander jeweils gleich große Abmessungen und sind dabei so bemessen, daß sich ein auf die Fotodioden-Zeile auftreffender Lichtspot zumindest über drei benachbart zueinander angeordnete Fotodioden-Zellen Zₙ₋₁, Zₙ und Zₙ₊₁ erstreckt. Alternativ ist es jedoch ebenso denkbar, Fotodioden-Zellen zu verwenden, die eine voneinander abweichende Größe besitzen.

Diagramm b zeigt die in einem auf einer Sollposition auftreffenden Lichtspot auftretende Energieverteilung, welche im wesentlichen eine gaußsche Form besitzt.

Diagramm c zeigt die von den Fotodioden-Zellen Zₙ₋₂ bis Zₙ₊₁ gelieferten Energien, wobei sich hier - aufgetragen über den Ort - ein treppenförmiger Verlauf ergibt, welcher an die gaußsche Form gemäß Diagramm b angepaßt ist.

Bei dem in der Figur dargestellten Ausführungsbeispiel weisen die Faktoren F₁ bis Fₙ₋₁ den Wert "+1" auf, während die Faktoren Fₙ₊₁ bis Fₘ den Wert "-1" aufweisen.

Diagramm d zeigt die mit den Faktoren Fₓ gewichteten Energiewerte gemäß Diagramm c. Dabei kann Diagramm d entnommen werden, daß der Faktor Fₙ erfindungsgemäß so eingestellt ist, daß die eingangs definierte Summe Sₙ den Wert "0" annimmt. Dies bedeutet im dargestellten Ausführungsbeispiel konkret, daß die Summe der gemäß Diagramm d gewichteten Energien der Fotodioden-Zellen Zₙ₋₂ und Zₙ₋₁ betragsmäßig genau so groß ist wie die Summe der gewichteten Energien der Fotodioden-Zellen Zₙ und Zₙ₊₁. Aus dem dargestellten Ausführungsbeispiel wird ohne weiteres klar, daß dieses Kriterium "Sₙ = 0" nicht mehr erfüllt ist, wenn der Spot beispielsweise geringfügig nach links verschoben wird, da in diesem Fall die von der Fotodioden-Zelle Zₙ₋₂ gelieferte Energie größer werden würde, während die von der Fotodioden-Zelle Zₙ₊₁ gelieferte Energie abnehmen würde. Die Summe Sₙ würde in diesem Fall positiv, also ungleich "0" werden.

Somit kann mit dem vorstehend erläuterten Verfahren exakt festgestellt werden, ob sich der Spot in der vorgegebenen Sollposition befindet, in welcher das Kriterium "Sₙ = 0" gilt.

## Patentansprüche

1. Verfahren zur Ermittlung der Position eines Lichtspots auf einer aus m Fotodioden-Zellen (Zₓ) bestehenden Fotodioden-Zeile, bei dem das Größenverhältnis zwischen Lichtspot und Fotodioden-Zellen (Zₓ) derart gewählt wird, daß sich der Lichtspot zumindest über drei benachbarte Fotodioden-Zellen (Zₙ₋₁, Zₙ, Zₙ₊₁)erstreckt,
jeder der m Fotodioden-Zellen (Zₓ) jeweils ein Faktor (Fₓ) zugeordnet wird,
für alle m Fotodioden-Zellen (Zₓ) die jeweils empfangene Energie (Eₓ) ermittelt wird,
bezüglich jeder der m Fotodioden-Zellen (Zₓ) das Produkt (Pₓ) aus der jeweils empfangenen Energie (Eₓ) und dem jeweils zugeordneten Faktor (Fₓ) bestimmt wird, und
als die Position des Lichtspots auf der Fotodioden-Zeile kennzeichnender Wert die Summe S der m Produkte (Pₓ) herangezogen wird,
**dadurch gekennzeichnet,**
**daß** zu Beginn eines dem eigentlichen Betriebsmodus vorgeschalteten Teach-Modus diejenige Fotodioden-Zelle Zₙ ermittelt wird, in deren Bereich der energetische Schwerpunkt eines in Sollposition befindlichen Teach-Lichtspots liegt, und
**daß** für den Betriebsmodus alle Faktoren F₁ bis Fₙ₋₁ mit -b, alle Faktoren Fₙ₊₁ bis Fₘ mit +b und der Faktor Fₙ mit einem zwischen -b und +b liegenden Wert derart belegt werden, daß die Summe S bei in Sollposition befindlichem Lichtspot den Wert "0" annimmt.

2. Verfahren nach Anspruch 1,
**dadurch gekennzeichnet,**
**daß** im Betriebsmodus festgestellt wird, ob sich der Lichtspot an einer zuvor festgelegten Sollposition befindet oder ob sich der Lichtspot auf der einen oder auf der anderen Seite einer zuvor festgelegten Sollposition befindet.

3. Verfahren nach Anspruch 1 oder 2,
**dadurch gekennzeichnet,**
**daß** während des Teach-Modus als die den energetischen Schwerpunkt des Teach-Lichtspots aufweisende Fotodioden-Zelle diejenige Fotodioden-Zelle Zₙ bestimmt wird, die die höchste empfangene Energie Eₓ liefert.

4. Verfahren nach Anspruch 1 oder 2,
**dadurch gekennzeichnet,**
**daß** während des Teach-Modus die den energetischen Schwerpunkt des Teach-Lichtspots aufweisende Fotodioden-Zelle Zₙ dadurch bestimmt wird, daß nacheinander für x = 1 bis m folgende Schritte durchgeführt werden:
- Belegung aller Faktoren F₁ bis Fₓ₋₁ mit -a
- Belegung des Faktors Fₓ mit "0"
- Belegung aller Faktoren Fₓ₊₁ bis Fₘ mit +a
- Bildung der Summe Sₓ,
woraufhin dann derjenige Wert x als n definiert wird, bei dem die Summe Sₓ den betragsmäßig geringsten Wert annimmt.

5. Verfahren nach einem der vorherigen Ansprüche,
**dadurch gekennzeichnet,**
**daß** a und/oder b gleich 1 ist.

6. Verfahren zur Ermittlung der Position eines Lichtspots auf einer aus m Fotodioden-Zellen (Zₓ) bestehenden Fotodioden-Zeile, bei dem das Größenverhältnis zwischen Lichtspot und Fotodioden-Zellen (Zₓ) derart gewählt wird, daß sich der Lichtspot zumindest über drei benachbarte Fotodioden-Zellen (Zₙ₋₁, Zₙ, Zₙ₊₁) erstreckt,
jeder der m Fotodioden-Zellen (Zₓ) jeweils ein Faktor (Fₓ) zugeordnet wird,
für alle m Fotodioden-Zellen (Zₓ) die jeweils empfangene Energie (Eₓ) ermittelt wird,
bezüglich jeder der m Fotodioden-Zellen (Zₓ) das Produkt (Pₓ) aus der jeweils empfangenen Energie (Eₓ) und dem jeweils zugeordneten Faktor (Fₓ) bestimmt wird,
als die Position des Lichtspots auf der Fotodioden-Zeile kennzeichnender Wert die Summe S der m Produkte (Pₓ) herangezogen wird,
**dadurch gekennzeichnet,**
**daß** die den energetischen Schwerpunkt des Lichtspots aufweisende Fotodioden-Zelle Zₙ dadurch bestimmt wird, daß nacheinander für x = 1 bis m folgende Schritte durchgeführt werden:
- Belegung aller Faktoren F₁ bis Fₓ₋₁ mit -a
- Belegung des Faktors Fₓ mit "0"
- Belegung aller Faktoren Fₓ₊₁ bis Fₘ mit +a
- Bildung der Summe Sₓ,
woraufhin dann derjenige Wert x als n definiert wird, bei dem die Summe Sₓ den betragsmäßig geringsten Wert annimmt, und
**daß** anschließend alle Faktoren F₁ bis Fₙ₋₁ mit -b, alle Faktoren Fₙ₊₁ bis Fₘ mit +b und der Faktor Fₙ mit einem zwischen -b und +b liegenden Wert derart belegt werden, daß die Summe Sₙ den Wert "0" annimmt, wobei letztlich der Wert des ermittelten Faktors Fₙ die Position des energetischen Schwerpunkts des Lichtspots innerhalb der Fotodioden-Zelle Zₙ kennzeichnet.

## Claims

1. A method of determining the position of a light spot on a photodiode row consisting of m photodiode cells (Zₓ), wherein
the size ratio between the light spot and the photodiode cells (Zₓ) is selected such that the light spot extends over at least three adjacent photodiode cells (Zₙ₋₁, Zₙ, Zₙ₊₁);
a respective factor (Fₓ) is associated with each of the m photodiode cells (Zₓ);
the respectively received energy (Eₓ) is determined for all m photodiode cells (Zₓ);
the product (Pₓ) of the respectively received energy (Eₓ) and the respectively associated factor (Fₓ) is determined with respect to each of the m photodiode cells (Zₓ); and
the sum S of the m products (Pₓ) is used as the value marking the position of the light spot on the photodiode row,
**characterized in that**
**that** photodiode cell Zₙ, in whose range the energetic center of gravity of a teaching light spot located in the desired position is disposed, is determined at the start of a teaching mode provided prior to the actual operating mode; and
**in that**, for the operating mode, all factors F₁ to Fₙ₋₁ are assigned the value -b, all factors Fₙ₊₁ to Fₘ are assigned the value +b and the factor Fₙ is assigned a value lying between -b and +b such that the sum S adopts the value "0" when the light spot is in the desired position.

2. A method in accordance with claim 1, **characterized in that** a determination is made in the operating mode whether the light spot is located at a previously fixed desired position or whether the light spot is located at the one or at the other side of a previously fixed desired position.

3. A method in accordance with claim 1 or claim 2, **characterized in that**, during the teaching mode, that photodiode cell Zn which delivers the highest received energy Eₓ is determined as the photodiode cell having the energetic center of gravity of the teaching light spot.

4. A method in accordance with claim 1 or claim 2, **characterized in that**, during the teaching mode, the photodiode cell Zₙ having the energetic center of gravity of the teaching light spot is determined **in that** the following steps are carried out successively for x = 1 to m:
- assignment of -a to all factors F₁ to Fₓ₋₁
- assignment of "0" to the factor Fₓ
- assignment of +a to all factors Fₓ₊₁ to Fₘ
- forming of the sum Sₓ,
whereupon that value x is then defined as n at which the sum Sₓ adopts the lowest value by amount.

5. A method in accordance with any one of the preceding claims, **characterized in that** a and/or b is equal to 1.

6. A method of determining the position of a light spot on a photodiode row consisting of m photodiode cells (Zₓ), wherein
the size ratio between the light spot and the photodiode cells (Zₓ) is selected such that the light spot extends over at least three adjacent photodiode cells (Zₙ₋₁, Zₙ, Zₙ₊₁);
a respective factor (Fₓ) is associated with each of the m photodiode cells (Zₓ);
the respectively received energy (Eₓ) is determined for all m photodiode cells (Zₓ);
the product (Pₓ) of the respectively received energy (Eₓ) and the respectively associated factor (Fₓ) is determined with respect to each of the m photodiode cells (Zₓ);
the sum S of the m products (Pₓ) is used as the value marking the position of the light spot on the photodiode row,
**characterized in that**
the photodiode cell Zₙ having the energetic center of gravity of the light spot is determined **in that** the following steps are carried out successively for x = 1 to m:
- assignment of -a to all factors F₁ to Fₓ₋₁
- assignment of "0" to the factor Fₓ
- assignment of +a to all factors Fₓ₊₁ to Fₘ
- forming of the sum Sₓ,
whereupon that value x is then defined as n at which the sum Sₓ adopts the lowest value by amount; and
**in that** subsequently all factors F₁ to Fₙ₋₁ are assigned the value -b, all factors Fₙ₊₁ to Fₘ are assigned the value +b and the factor Fₙ is assigned a value lying between -b and +b such that the sum Sₙ adopts the value "0", with the value of the determined factor Fₙ ultimately marking the position of the energetic center of gravity of the light spot inside the photodiode cell Zₙ.

## Revendications

1. Procédé destiné à la détermination de la position d'un spot lumineux sur une ligne de photodiodes constituée de m cellules à photodiodes (Zₓ), dans lequel le rapport de grandeur entre le spot lumineux et des cellules à photodiodes (Zₓ) est choisi de telle sorte que le spot lumineux s'étende sur au moins trois cellules à photodiodes (Zₙ₋₁, Zₙ, Zₙ₊₁) adjacentes,
un facteur (Fₓ) est respectivement associé à chacune des m cellules à photodiodes (Zₓ),
l'énergie (Eₓ) respectivement reçue est déterminée pour toutes les m cellules à photodiodes (Zₓ),
le produit (Pₓ) issu de l'énergie (Eₓ) respectivement reçue et du facteur (Fₓ) respectivement associé est défini en ce qui concerne chacune des m cellules à photodiodes (Zₓ), et
la somme S des m produits (Pₓ) est utilisée en tant que valeur caractérisant la position du spot lumineux sur la ligne de photodiodes,
**caractérisé en ce que**,
au début d'un mode d'apprentissage précédant le mode de fonctionnement proprement dit, il est procédé à la détermination de la cellule à photodiode Zₙ dans la zone de laquelle est situé le barycentre énergétique d'un spot lumineux d'apprentissage se trouvant dans la position de consigne, et
**en ce que**, pour le mode de fonctionnement, tous les facteurs F₁ à Fₙ₋₁ sont affectés de la valeur - b, tous les facteurs Fₙ₊₁ à Fₘ de la valeur + b, et le facteur Fₙ d'une valeur située entre - b et + b, de telle sorte que la somme S prenne la valeur "0" lorsque le spot lumineux se trouve dans la position de consigne.

2. Procédé selon la revendication 1,
**caractérisé en ce que**,
au cours du mode de fonctionnement, il est détecté si le spot lumineux se trouve sur une position de consigne définie auparavant ou si le spot lumineux se trouve d'un côté ou de l'autre côté d'une position de consigne définie auparavant.

3. Procédé selon la revendication 1 ou 2,
**caractérisé en ce que**,
pendant le mode d'apprentissage, la cellule à photodiode qui est déterminée en tant que cellule à photodiode Zₙ comportant le barycentre énergétique du spot lumineux d'apprentissage est celle qui délivre la plus haute énergie Eₓ reçue.

4. Procédé selon la revendication 1 ou 2,
**caractérisé en ce que**,
pendant le mode d'apprentissage, la cellule à photodiode Zₙ comportant le barycentre énergétique du spot lumineux d'apprentissage est déterminée par le fait que les phases suivantes sont exécutées successivement pour x = 1 à m :
- affectation de la valeur - a à tous les facteurs F₁ à Fₓ₋₁,
- affectation de la valeur "0" au facteur Fₓ,
- affectation de la valeur + a à tous les facteurs Fₓ₊₁ à Fₘ,
- formation de la somme Sₓ,
suite à quoi la valeur x qui est définie en tant que n est celle dont la somme Sₓ prend en valeur absolue la valeur la plus faible.

5. Procédé selon l'une des revendications précédentes,
**caractérisé en ce que**
a et/ou b sont égaux à 1.

6. Procédé destiné à la détermination de la position d'un spot lumineux sur une ligne de photodiodes constituée de m cellules à photodiodes (Zₓ), dans lequel le rapport de grandeur entre le spot lumineux et des cellules à photodiodes (Zₓ) est choisi de telle sorte que le spot lumineux s'étende sur au moins trois cellules à photodiodes (Zₙ₋₁, Zₙ, Zₙ₊₁) adjacentes,
un facteur (Fₓ) est respectivement associé à chacune des m cellules à photodiodes (Zₓ),
l'énergie (Eₓ) respectivement reçue est déterminée pour toutes les m cellules à photodiodes (Zₓ),
le produit (Pₓ) issu de l'énergie (Eₓ) respectivement reçue et du facteur (Fₓ) respectivement associé est défini en ce qui concerne chacune des m cellules à photodiodes (Zₓ),
la somme S des m produits (Pₓ) est utilisée en tant que valeur caractérisant la position du spot lumineux sur la ligne de photodiodes,
**caractérisé en ce que**,
la cellule à photodiode Zₙ comportant le barycentre énergétique du spot lumineux est déterminée par le fait que les phases suivantes sont exécutées successivement pour x = 1 à m :
- affectation de la valeur - a à tous les facteurs F₁ à Fₓ₋₁,
- affectation de la valeur "0" au facteur Fₓ,
- affectation de la valeur + a à tous les facteurs Fₓ₊₁ à Fₘ,
- formation de la somme Sₓ,
suite à quoi la valeur x qui est définie en tant que n est celle dont la somme Sₓ prend quant à son montant la valeur la plus faible, et **en ce qu'**ensuite tous les facteurs F₁ à Fₙ₋₁ sont affectés de la valeur - b, tous les facteurs Fₙ₊₁ à Fₘ de la valeur + b, et le facteur Fₙ d'une valeur située entre - b et + b, de telle sorte que la somme Sₙ prenne la valeur "0", la valeur du facteur Fₙ déterminé caractérisant finalement la position du barycentre énergétique du spot lumineux à l'intérieur de la cellule à photodiode Zₙ.
